# EUROPEAN PATENT APPLICATION

(11) **EP 2 982 916 A1**
(43) Date of publication of application: **10.02.2016**
(21) Application number: 14779879.7
(22) Date of filing: 20.01.2014
(51) Int. Cl.: F25D 11/00, F25D 23/00

(54) **REFRIGERATOR**

(30) Priority: 03.04.2013 JP 2013077882
(71) Applicant: Mitsubishi Electric Corporation, Tokyo 100-8310 (JP)
(72) Inventor: YOKOO, Hiroaki, Tokyo 100-8310 (JP); OKABE, Makoto, Tokyo 100-8310 (JP); SAKAMOTO, Katsumasa, Tokyo 100-8310 (JP); MAEDA, Go, Tokyo 100-8310 (JP)
(74) Representative: Pfenning, Meinig & Partner mbB
(86) International application number: PCT/JP2014/051002
(87) International publication number: WO 2014/162759

(57) **Abstract**

A storage compartment, operation display means configured to display a plurality of power saving levels each indicating a power saving index and to accept an operation input of selecting one power saving level from among the plurality of power saving levels, and control means configured to, when an operation input of selecting one power saving level from among the plurality of power saving levels displayed on the operation display means is made, calculate one or a plurality of power saving plans regarding a target temperature for the storage compartment in accordance with the selected one power saving level, are included. The operation display means displays the power saving plans calculated by the control means and accepts an operation input of executing the power saving plan.

## Description

### Technical Field

The present invention relates to a refrigerator.

### Background Art

Hitherto, there is a refrigerator which determines a power saving level based on a storage compartment temperature of "weak", "intermediate", or "strong" which is set by a user based on the type, the amount, and the storage life of food, and displays a result of the determination on an operation panel.

In addition, there is a refrigerator system in which a server receives and stores information regarding a use state of a refrigerator which is transmitted from an information terminal device, compares current and past electricity expenses, and transmits, to the information terminal device, advice information for saving power, and the information terminal device displays the advice information on display means to notify a user of the advice information (e.g., see Patent Literature 1).

Moreover, there is also a refrigerator which determines a use state of the refrigerator based on frequency of door opening and closing of the refrigerator and notifies an advice about use leading to power saving (e.g., see Patent Literature 2).

### Citation List

### Patent Literature

Patent Literature 1: Japanese Unexamined Patent Application Publication No. 2005-249358 (page 9, page 10, Figs. 8 to 10)
Patent Literature 2: Japanese Unexamined Patent Application Publication No. 2002-147930 (page 3, page 4, Fig. 1, Fig. 2)

### Summary of Invention

### Technical Problem

However, in the above-described refrigerator which: determines a power saving level based on a storage compartment temperature of "weak", "intermediate", or "strong" which is set by a user; and displays a result of the determination on the operation panel, it is difficult for the user to understand whether the set storage compartment temperature is suitable for the user's use state.

The refrigerator described in Patent Literature 1 notifies the user of an advice for leading to motivation to save power, but the information is not specific information corresponding to the user's use state, and thus it is difficult for the user to understand how to save power.

The refrigerator described in Patent Literature 2 notifies the user of an advice leading to power saving, but it is impossible to notify how much the temperature of each storage compartment should be adjusted in accordance with the user's use state of the refrigerator to save power.

The present invention has been made in the context of the above-described problems, and an object of the present invention is to obtain a refrigerator which executes power saving corresponding to a user's use state. Solution to Problem

A refrigerator according to the present invention includes: a storage compartment; operation display means configured to display a plurality of power saving levels each indicating a power saving index and to accept an operation input of selecting one power saving level from among the plurality of power saving levels; and control means configured to, when an operation input of selecting one power saving level from among the plurality of power saving levels displayed on the operation display means is made, calculate one or a plurality of target temperature setting plans in accordance with the selected one power saving level. The operation display means displays the target temperature setting plans calculated by the control means and accepts an operation input of executing the target temperature setting plan.

### Advantageous Effects of Invention

According to the present invention, one or a plurality of target temperature setting plans corresponding to one power saving level selected by a user are displayed on the operation display means, and the operation display means accepts an operation input of executing the target temperature setting plan. Thus, after confirming whether the target temperature setting plan corresponding to the selected one power saving level is suitable for a user's use state, the user is allowed to execute the target temperature setting plan. Therefore, it is possible to obtain a refrigerator which executes power saving corresponding to the user's use state.

### Brief Description of Drawings

[Fig. 1] Fig. 1 is a front view of a refrigerator 100 according to Embodiment 1 of the present invention.
[Fig. 2] Fig. 2 is a lateral cross-sectional view of the refrigerator 100 according to Embodiment 1 of the present invention.
[Fig. 3] Fig. 3 is a diagram showing an example of an operation main screen displayed on an operation display panel 6 of the refrigerator 100 according to Embodiment 1 of the present invention.
[Fig. 4] Fig. 4 is a diagram showing an example of a power saving setting screen displayed on the operation display panel 6 of the refrigerator 100 according to Embodiment 1 of the present invention.
[Fig. 5] Fig. 5 is a diagram showing an example of a power saving plan selection screen displayed on the operation display panel 6 of the refrigerator 100 according to Embodiment 1 of the present invention.
[Fig. 6] Fig. 6 is a diagram showing an example of a power saving plan temperature detailed explanation diagram displayed on the operation display panel 6 of the refrigerator 100 according to Embodiment 1 of the present invention.
[Fig. 7] Fig. 7 is a diagram showing an example of use evaluation details displayed on the operation display panel 6 of the refrigerator 100 according to Embodiment 1 of the present invention.
[Fig. 8] Fig. 8 is a diagram showing an example of a door opening frequency display graph 31 displayed on the operation display panel 6 of the refrigerator 100 according to Embodiment 1 of the present invention.
[Fig. 9] Fig. 9 is a diagram showing an example where external devices and a refrigerator 100 according to Embodiment 2 of the present invention are connected to a centralized controller 132 to establish a home network.
[Fig. 10] Fig. 10 is a diagram showing an example of a power saving setting screen displayed during a power consumption saving mode on the operation display panel 6 of the refrigerator 100 according to Embodiment 2 of the present invention.
[Fig. 11] Fig. 11 is a diagram showing an example of a power consumption saving mode temperature detailed explanation diagram displayed during the power consumption saving mode on the operation display panel 6 of the refrigerator 100 according to Embodiment 2 of the present invention.
[Fig. 12] Fig. 12 is a diagram showing an example of a power saving plan selection screen displayed on the operation display panel 6 of the refrigerator 100 according to Embodiment 3 of the present invention.
[Fig. 13] Fig. 13 is a diagram showing an example of a power saving plan temperature detailed explanation diagram displayed on the operation display panel 6 of the refrigerator 100 according to Embodiment 4 of the present invention.

### Description of Embodiments

### Embodiment 1

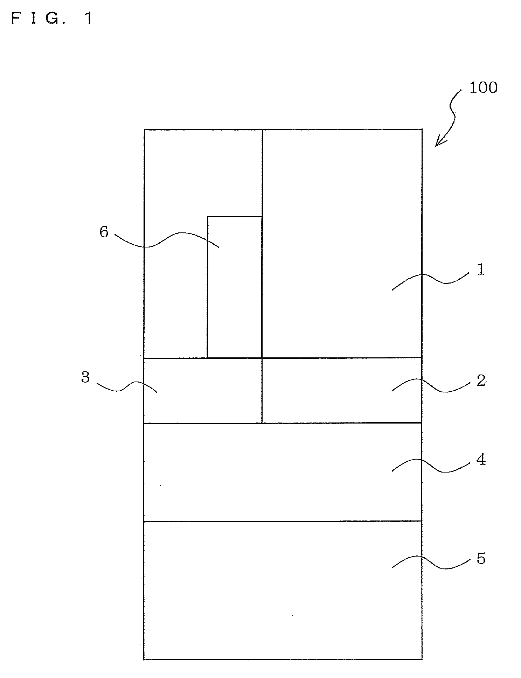

Fig. 1 is a front view of a refrigerator 100 according to Embodiment 1 of the present invention.

The refrigerator 100 includes, as storage compartments to store food and the like, a refrigerating compartment 1 provided at the uppermost stage, a switching compartment 2 and an ice making compartment 3 arranged side by side below the refrigerating compartment 1, a freezing compartment 4 provided at the switching compartment 2 and ice making compartment 3 side, and a vegetable compartment 5 provided below the freezing compartment 4.

The front of each storage compartment is opened. To each opening, a door is provided which closes the opening so as to be able to open/close the opening. Specifically, a side-by-side opening/closing door is provided to the refrigerating compartment 1, and a drawer type door is provided to each of the switching compartment 2, the ice making compartment 3, the freezing compartment 4, and the vegetable compartment 5. The switching compartment 2 is a storage compartment which is provided below the refrigerating compartment 1 and is able to switch from a refrigeration temperature zone (-18 degrees C) to each temperature zone such as for cold storage (3 degrees C), for chilled storage (0 degrees C), and softly freezing (-7 degrees C).

On the front surface of the door of the refrigerating compartment 1, an operation display panel 6 such as a liquid crystal panel is provided which is able to adjust the temperature of each storage compartment and various settings and has a display function of displaying the temperature of each storage compartment and the like. As the operation mode of the operation display panel 6, for example, a physical switch or touch panel mode may be used.

The operation display panel 6 may be installed within the refrigerator 100, for example, on a lateral side of the refrigerating compartment 1. In addition, the form of the refrigerator 100 is not limited to the above configuration, and, for example, the switching compartment 2 and the ice making compartment 3 may not be provided, or the positions of the freezing compartment 4 and the vegetable compartment 5 may be interchanged with each other.

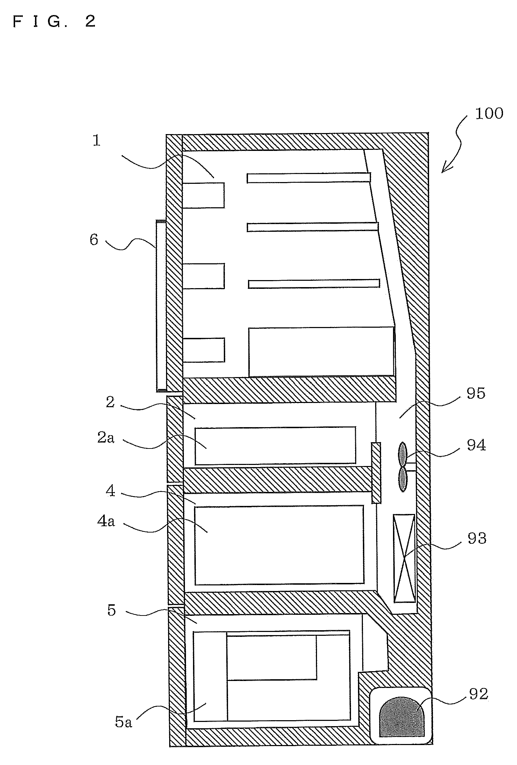

Fig. 2 is a lateral cross-sectional view of the refrigerator 100 according to Embodiment 1 of the present invention.

As shown in Fig. 2, a compressor 92, a cooler 93, and an air-sending fan 94 which sends cold air cooled by the cooler 93 to each storage compartment within the refrigerator 100 are provided at a back side of the refrigerator 100. The cooler 93 is provided above the compressor 92, and the air-sending fan 94 is provided above the cooler 93. An air passage 95 for introducing the cold air cooled by the cooler 93 to each storage compartment is formed above the air-sending fan 94.

The temperature of each storage compartment is detected by a thermistor (not shown) installed at each storage compartment. Control means (not shown) controls the opening degree of a damper (not shown) installed on the air passage 95, the capacity of the compressor 92, and the amount of air sent by the air-sending fan 94 based on the temperature detected by each thermistor, such that the temperature within each storage compartment becomes a preset temperature. In addition, a door opening frequency detection sensor (not shown) which detects door opening frequency of the refrigerator 100 is provided at each storage compartment.

A storage case 2a which is able to store food is provided in the switching compartment 2. A storage case 4a which stores food is provided in the freezing compartment 4. An outer case 5a which is able to store food is provided in the vegetable compartment 5. The number of cases provided in each storage compartment may be 1, but a plurality of cases may be provided in accordance with the entire capacity of the refrigerator to improve the organizing performance within the storage compartment.

Next, flow of the cold air cooled by the cooler 93 will be described.

The cold air cooled by the cooler 93 is sent through the air passage 95 to the refrigerating compartment 1, the switching compartment 2, the ice making compartment 3, and the freezing compartment 4 to cool each storage compartment. The cold air returning from the refrigerating compartment 1 flows through a refrigerating compartment return air passage (not shown) and circulates through the inside of in the vegetable compartment 5 to cool the inside of the vegetable compartment 5. Then, the cold air having circulated through the inside of the vegetable compartment 5 returns through a vegetable compartment return air passage (not shown) to the cooler 93.

Next, screens displayed on the operation display panel 6 will be described.

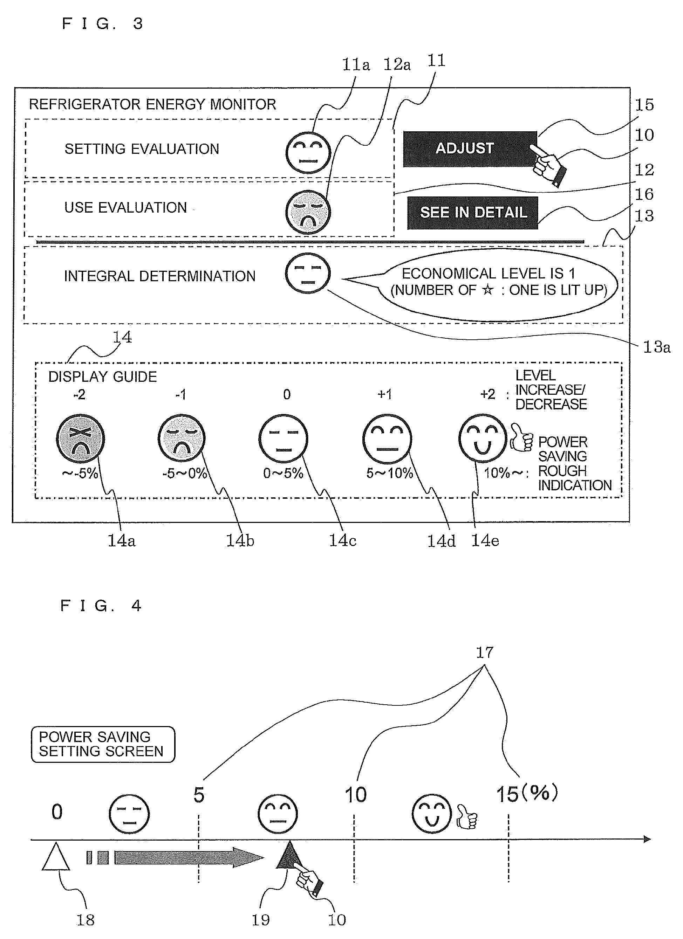

Fig. 3 is a diagram showing an example of an operation main screen displayed on the operation display panel 6 of the refrigerator 100 according to Embodiment 1 of the present invention. As shown in Fig. 3, a pointer 10, a temperature setting evaluation section 11, a use evaluation section 12, an integral determination evaluation section 13, an evaluation display guide section 14, a power saving adjustment button 15, and a detail check button 16 are displayed on the operation display panel 6.

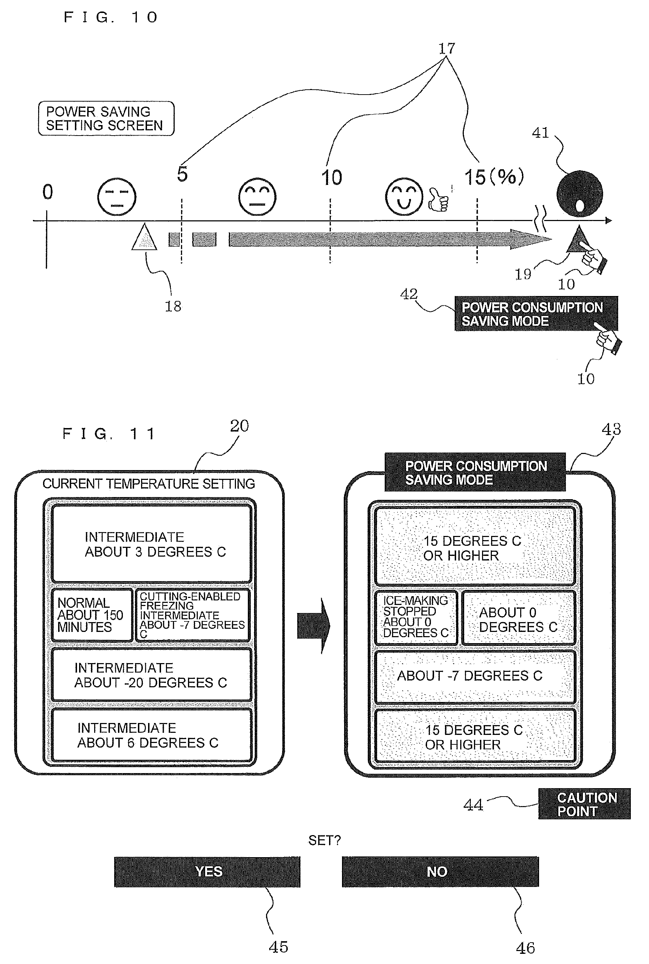

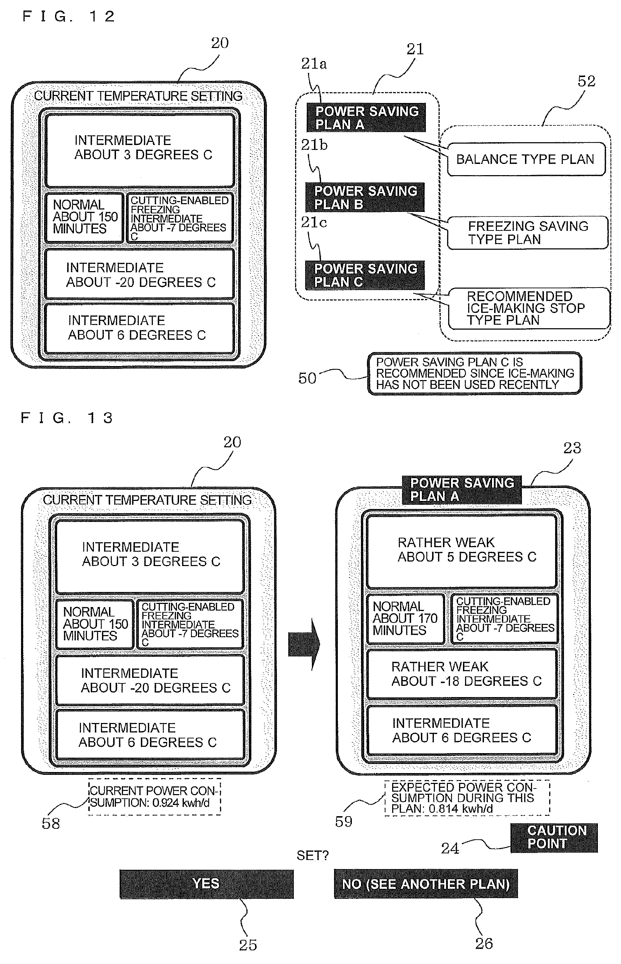

A figure 11 a which indicates a result of calculation of a power saving level based on information on the temperature within each storage compartment (set temperature set by a user) is displayed in the temperature setting evaluation section 11. A figure 12a which indicates a result of calculation of a power saving level from information on information on door opening/closing frequency is displayed in the use evaluation section 12. A figure 13a which indicates a result of calculation based on the information on the temperature within each storage compartment and the information on door opening/closing frequency is displayed in the integral determination evaluation section 13. Each of the figures 11 a, 12a, and 13a is a figure representing expression of a human face. Only either one of the figures 11 a and 12a may be displayed.

The evaluation display guide section 14 is a section for indicating the meanings of the figures 11 a, 12a, and 13a. Figures 14a, 14b, 14c, 14d, and 14e are displayed in the evaluation display guide section 14 together with information regarding power saving. The figure 11 a is the same as the figure 14d; the figure 12a is same as the figure 14b; and the figure 13a is the same as the figure 14c. Thus, the user is allowed to understand the meanings of the figures 11 a, 12a, and 13a by making reference to the figures displayed in the evaluation display guide section 14, and thus is allowed to intuitively understand how much power is saved currently.

The power saving adjustment button 15 is a button for switching to a screen in which a power saving level is adjusted. For example, the power saving adjustment button 15 is operated when the user makes reference to the figure 11 a displayed in the temperature setting evaluation section 11 and desires further power saving. The detail check button 16 is a button for switching to a screen in which setting of temperature adjustment and information based on door opening/closing frequency of the refrigerator 100 are confirmed.

Next, an operation example of Fig. 3 will be described.

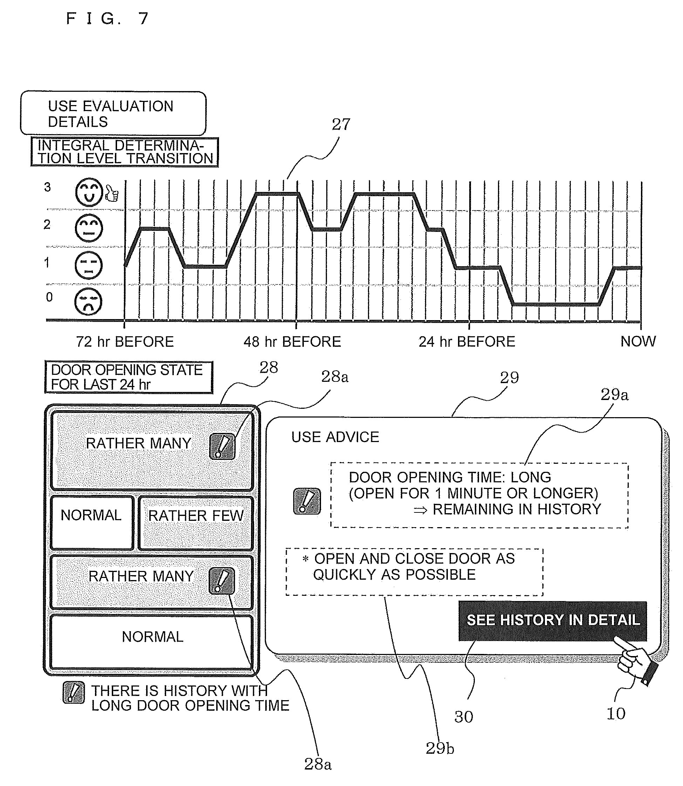

When the user operates the power saving adjustment button 15, the screen transitions to Fig. 4. When the user operates the detail check button 16, the screen transitions to Fig. 7 described later.

Fig. 4 is a diagram showing an example of a power saving setting screen displayed on the operation display panel 6 of the refrigerator 100 according to Embodiment 1 of the present invention. Fig. 4 is a screen to which transition is made when the power saving adjustment button 15 is operated in Fig. 3. As shown in Fig. 4, the pointer 10, a power consumption reduction rough indication 17, a power saving state cursor 18, and a power saving target value 19 are displayed on the operation display panel 6.

The power consumption reduction rough indication 17 is displayed, for example, at intervals of 5% from "0%" to 15%", and "0%", "5%", "10%", and "15%" are displayed. The power saving state cursor 18 is a cursor which is able to be slid left and right by the user using the pointer 10. For example, it is possible to slide the power saving state cursor 18 to a position at the power saving target value 19 to adjust the power saving level. In a state of transition to Fig. 4, the power saving state cursor 18 is located at a position indicating the current power saving level. The power saving level represents a power saving index which is switched continuously or stepwise, and is used for calculating a later-described power saving plan.

Next, an operation example of Fig. 4 will be described.

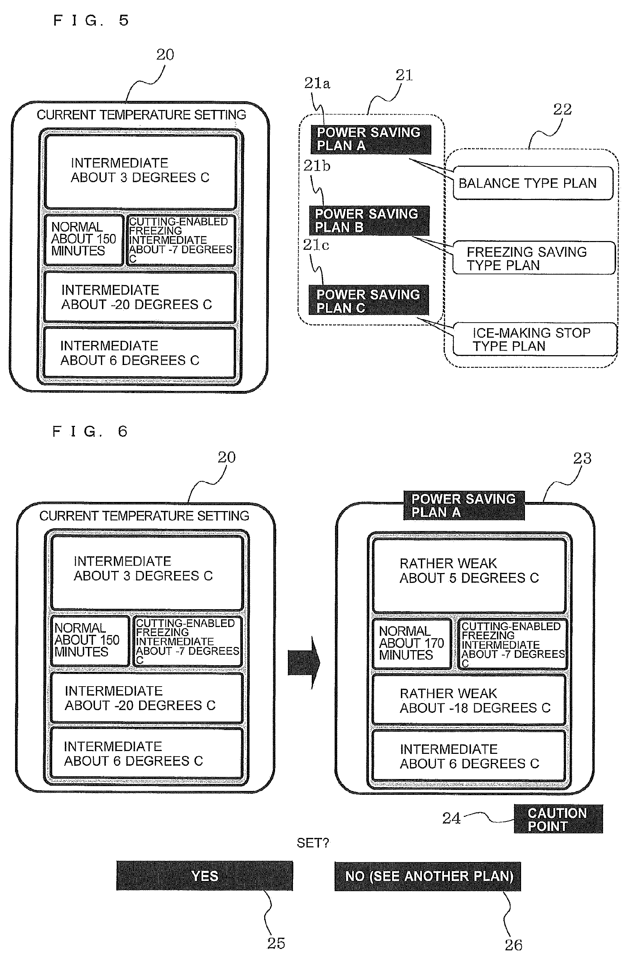

When the user operates the current power saving state cursor 18 to slide the current power saving state cursor 18 to the right side of the sheet to adjust the power saving level and sets the power saving target value 19, for example, at a location indicating about 8%, the screen transitions to Fig. 5.

Fig. 5 is a diagram showing an example of a power saving plan selection screen displayed on the operation display panel 6 of the refrigerator 100 according to Embodiment 1 of the present invention. Fig. 5 is a screen displayed when the power saving state cursor 18 is operated to set the power saving target value 19 in Fig. 4. As shown in Fig. 5, a current temperature etc. display area 20, a power saving plan display area 21, and a simple explanation display area 22 are displayed on the operation display panel 6.

The current temperature etc. display area 20 is an area in which, for example, a schematic diagram showing a front view of the refrigerator 100 is displayed, and wording indicating refrigerator interior information within each storage compartment is displayed in a figure for each storage compartment. The wording is, for example, "intermediate about 3 degrees C" for the refrigerating compartment 1, "cutting-enabled freezing intermediate about -7 degrees C" for the switching compartment 2, "normal about 150 minutes" for ice making compartment 3, "intermediate about -20 degrees C" for the freezing compartment 4, and "intermediate about 6 degrees C" for the vegetable compartment 5. "Intermediate" indicates a degree of the temperature of the storage compartment, "normal" indicates an ice making speed, "about 150 minutes" indicates a time taken to make ice, and an ice making time is determined by adjusting the amount of cold air supplied into the ice making compartment.

The power saving plan display area 21 is an area in which power saving plan setting buttons 21 a, 21 b, and 21 c are displayed. The power saving plan setting button 21 a corresponds to "power saving plan A", the power saving plan setting button 21 b corresponds to "power saving plan B", and the power saving plan setting button 21 c corresponds to "power saving plan C". These power saving plans are plans which specify a target temperature for each storage compartment which is calculated in accordance with a selected power saving level. The control means (not shown) calculates one or a plurality of power saving plans for achieving a power saving target value 19 set by the user, in accordance with the power saving target value 19. The number of power saving plans displayed on the operation display panel 6 is not limited to three as described above, but may be one or two, or may be four or more. Each power saving plan of Embodiment 1 corresponds to a target temperature setting plan of the present invention.

The simple explanation display area 22 is an area in which wording which explains the power saving plan setting buttons 21 a, 21 b, and 21 c is displayed, and the wording is, for example, "balance type plan", "freezing saving type plan", and "ice-making stop type plan". As it is recognized that the "balance type plan" is explanation of the "power saving plan A", the "freezing saving type plan" is explanation of the "power saving plan B", and the "ice-making stop type plan" is explanation of the "power saving plan C", the "balance type plan", the "freezing saving type plan", and the "ice-making stop type plan" are displayed so as to be associated with the respective power saving plans.

Next, an operation example of Fig. 5 will be described.

When the user selects the power saving plan setting button 21 a from among the power saving plan setting buttons 21 a, 21 b, and 21 c, the screen transitions to Fig. 6.

Fig. 6 is a diagram showing an example of a power saving plan temperature detailed explanation diagram displayed on the operation display panel 6 of the refrigerator 100 according to Embodiment 1 of the present invention. Fig. 6 is a screen displayed when the power saving plan setting button 21 a is selected in Fig. 5. As shown in Fig. 6, the current temperature etc. display area 20, a set temperature etc. display area 23, a caution point button 24, a decision button 25, and a cancel button 26 are displayed on the operation display panel 6.

The set temperature etc. display area 23 is an area in which a schematic diagram showing a front view of the refrigerator 100 is displayed, similarly to the current temperature etc. display area 20, and wording indicating a state within each storage compartment is displayed in a figure for each storage compartment. Information such as a set temperature for each storage compartment when the user executes the "power saving plan A" is shown in the set temperature etc. display area 23. Specifically, for example, the information is "rather weak about 5 degrees C" for the refrigerating compartment 1, "cutting-enabled freezing intermediate about -7 degrees C" for the switching compartment 2, "normal about 170 minutes" for the ice making compartment 3, " rather weak about -18 degrees C" for the freezing compartment 4, and "intermediate about 6 degrees C" for the vegetable compartment 5.

The caution point button 24 is a button for displaying a caution point due to change of the temperature within the storage compartment of the refrigerator 100. When the caution point button 24 is operated, information, such as a storage life of food being shortened and a time taken to make ice being lengthened, is displayed on the operation display panel 6. In the decision button 25, wording indicating positive, such as "Yes", is displayed. In the cancel button 26, wording indicating negative, such as "No (see another plan)", is displayed. The functions of the decision button 25 and the cancel button 26 will be described later.

Next, an operation example of Fig. 6 will be described.

When the user confirms the set temperature etc. display area 23 for each storage compartment of the refrigerator 100 and determines that the set temperature for each storage compartment which is displayed in the set temperature etc. display area 23 suits the own use, the user operates the decision button 25. When the decision button 25 is operated, the compressor 92 and the damper (not shown) are controlled such that the temperature in each storage compartment is the set temperature specified by the power saving plan selected by the user, and cooling operation is executed. On the other hand, when the user takes into consideration the refrigerator interior information such as temperatures displayed in the set temperature etc. display area 23, a caution point for the power saving plan displayed when the caution point button 24 is operated, and the like and determines that the information and the caution point do not suit the own use, the user operates the cancel button 26. When the cancel button 26 is operated, the screen returns to the screen of Fig. 5, and the user is allowed to confirm another power saving plan again.

Since the user is allowed to confirm a power saving plan that suits the user, through the operation display panel 6 as described above, the user is allowed to easily make temperature adjustment to save power after understanding that the power saving plan is suitable for the user's use state.

Fig. 7 is a diagram showing an example of use evaluation details displayed on the operation display panel 6 of the refrigerator 100 according to Embodiment 1 of the present invention. Fig. 7 is a screen to which transition is made when the detail check button 16 is operated in Fig. 3. As shown in Fig. 7, the pointer 10, an integral determination level transition graph 27, a door opening state display area 28, and a use advice display area 29 are displayed on the operation display panel 6.

The integral determination level transition graph 27 is a graph showing transition of a result of the degree of power saving which is calculated based on an information temperature (set temperature set by the user) within each storage compartment and door opening/closing frequency. The horizontal axis indicates time from 72 hours before to now. In addition, the vertical axis indicates a power saving level which is indicated, for example, at four levels of "0" to "3".

The door opening state display area 28 is an area in which a schematic diagram showing a front view of the refrigerator 100 is displayed, similarly to the current temperature etc. display area 20, and wording indicating a door opening state of each storage compartment within the last 24 hours from now are displayed. As the wording, for example, one of "rather many", "normal", and "rather few" in descending order of the door opening frequency is displayed. For example, the wording is "rather many" for the refrigerating compartment 1, "rather few " for the switching compartment 2, "normal" for the ice making compartment 3, "rather many" for the freezing compartment 4, and "normal" for the vegetable compartment 5. In addition, a mark 28a is provided to each of the figures for the refrigerating compartment 1 and the freezing compartment 4. The mark 28a is a mark provided to the figure for the storage compartment at which a door opening time is long (for example, the door is opened for 1 minute or longer).

The use advice display area 29 is an area in which wording 29a and 29b and a history confirmation button 30 are displayed. The wording 29a is wording indicating the meaning of the mark 28a and also indicating that the mark 28a remains in a history, and is, for example, "door opening time long (opened for 1 minute or longer) ⇒ remaining in history". The wording 29b is, for example, wording which prompts the user to shorten a door opening time, and is, for example, "* Open and close door as quickly as possible". The history confirmation button 30 is a button for transitioning to a screen in which the details of a door opening frequency are displayed. In the history confirmation button 30, for example, wording "see history in detail" is displayed.

Next, an operation example of Fig. 7 will be described.

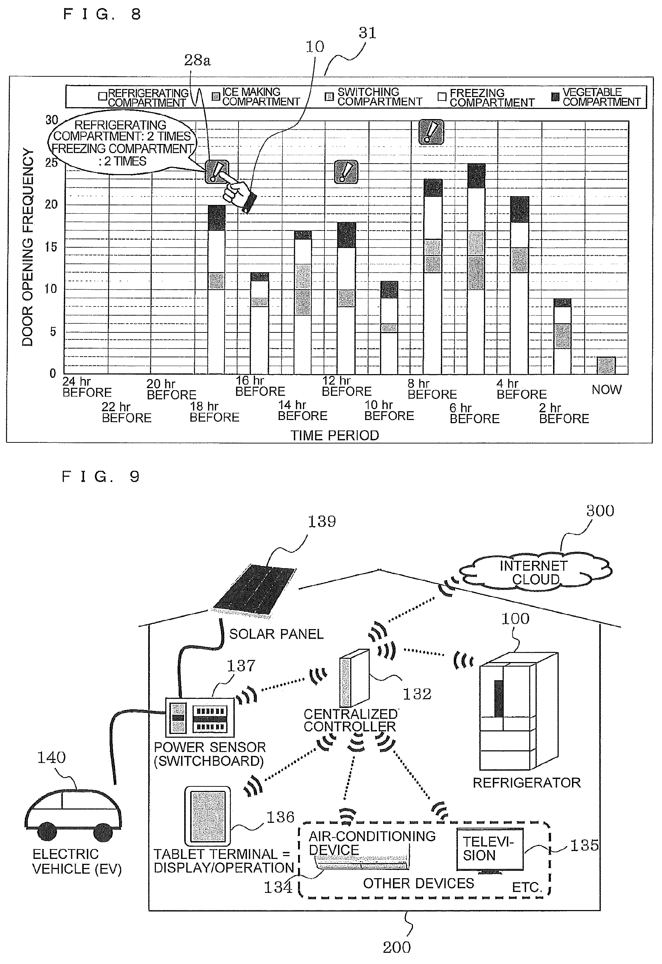

When the user operates the history confirmation button 30, the screen transitions to Fig. 8, and the user is allowed to confirm a door opening state for the last 24 hours.

Fig. 8 is a diagram showing an example of a door opening frequency display graph 31 displayed on the operation display panel 6 of the refrigerator 100 according to Embodiment 1 of the present invention. Fig. 8 is a screen to which transition is made when the history confirmation button 30 is operated in Fig. 7. As shown in Fig. 8, the door opening frequency display graph 31 shows door opening frequencies for the refrigerating compartment 1, the switching compartment 2, the ice making compartment 3, the freezing compartment 4, and the vegetable compartment 5 per hours. The horizontal axis indicates time periods from 24 before hours to now. In addition, the vertical axis indicates a door opening frequency of 0 to 30.

At time periods 18 hr before (18 hours before), 12 hr before (12 hours before), and 8 hr before (8 hours before), a mark 28a is displayed which indicates that the opening frequency for the storage compartment is equal to or greater than a predetermined time.

Next, an operation example of Fig. 8 will be described.

When the user moves the pointer 10 such that the pointer 10 is located within a coordinate area in which the mark 28a is displayed, the frequency for each storage compartment for which the door opening time is equal to or greater than the predetermined time is displayed on the operation display panel 6. For example, "refrigerating compartment: 2 times" and "freezing compartment: 2 times" are displayed as shown in Fig. 8. Thus, it is recognized that the door at the refrigerating compartment 1 was opened for the predetermined time or longer twice and the door at the freezing compartment 4 was opened for the predetermined time or longer twice.

As described above, the refrigerator 100 according to Embodiment 1 includes: operation display means which displays a plurality of power saving levels each indicating a power saving index and accepts an operation input of selecting one power saving level from among the plurality of power saving levels; and control means which, when an operation input of selecting one power saving level from among the plurality of power saving levels displayed on the operation display means is made, calculates one or a plurality of power saving plans corresponding to the selected one power saving level. The operation display means displays the power saving plans calculated by the control means and accepts an operation input of executing the power saving plan. Thus, after confirming that a target temperature setting plan corresponding to the selected one power saving level is suitable for a user's use state, the user is allowed to execute the target temperature setting plan. Therefore, it is possible to obtain a refrigerator which executes power saving corresponding to a user's use state.

In addition, in the refrigerator 100 according to Embodiment 1, refrigerator interior information such as the current temperature is displayed in the current temperature etc. display area 20 on the operation display panel 6, refrigerator interior information such as a temperature when the selected power saving plan is executed is displayed in the set temperature etc. display area 23, and the door opening frequency display graph 31 is displayed which shows the door opening frequencies for the refrigerating compartment 1, the switching compartment 2, the ice making compartment 3, the freezing compartment 4, and the vegetable compartment 5 per hours. Thus, the user is allowed to visually recognize the current operating state of the refrigerator 100 and the operating state of the refrigerator 100 after execution of power saving, to understand a power saving state and a power saving method, and to effortlessly save power.

### Embodiment 2

Fig. 9 is a diagram showing an example where the refrigerator 100 according to Embodiment 2 of the present invention and external devices which are, for example, electrical household appliances are connected to a centralized controller 132 to establish a home network. In Embodiment 2, the description of the parts common to Embodiment 1 is omitted, and the difference from Embodiment 1 will be mainly described.

As shown in Fig. 9, the refrigerator 100, the centralized controller 132, an air-conditioning device 134, a television 135, a tablet terminal 136 which is an interface device including a display unit and an operation unit, and a switchboard 137 including a power sensor are provided inside a house 200. A solar panel 139 and an electric vehicle 140 are provided outside the house 200. The centralized controller 132 is connected to the refrigerator 100 and external devices such as the air-conditioning device 134, the television 135, the tablet terminal 136, and the switchboard 137, to establish a home network. The switchboard 137 is connected not only to the centralized controller 132 but also to the solar panel 139 and a storage battery of the electric vehicle 140. The centralized controller 132 is connected via the Internet to an Internet cloud 300 which is an external data storage server and stores data transmitted via a network, and the centralized controller 132 and the Internet cloud 300 are able to exchange information.

The refrigerator 100 includes communication means composed of an optional network interface such as a LAN interface. The communication means of the refrigerator 100 is configured to be connectable to the above-described external devices. The communication means corresponds to external device communication means, cloud communication means, and interface device communication means of the present invention. The refrigerator 100 is connected via the communication means to the external devices such as the centralized controller 132, the air-conditioning device 134, the television 135, the tablet terminal 136, the switchboard 137, and the Internet cloud 300.

As described above, the centralized controller 132 is connected to the switchboard 137 including the power sensor. Thus, the centralized controller 132 is able to recognize power consumption of the entire house 200 and each external device, and is able to control power consumption such that, for example, when the power consumption of a certain external device increases, the power consumption of another external device is reduced.

In addition, the centralized controller 132 is connected to the tablet terminal 136. The tablet terminal 136 which includes a touch panel as an operation unit and a liquid crystal screen as a display unit is equipped with remote control software for remotely controlling the refrigerator 100 and the other external devices. The user is allowed to remotely control each external device by operating the tablet terminal 136 instead of a remote control means or an operation panel of each external device or the refrigerator 100. In addition, the tablet terminal 136 acquires, from the centralized controller 132, operation information (optional information such as ON/OFF state and set temperature) transmitted from the refrigerator 100 and the other external devices, and displays the operation information. Thus, the user is allowed to remotely confirm the state of the refrigerator 100 or the external device.

In addition, the centralized controller 132 is connected via the Internet to the Internet cloud 300 which is the external data storage server, and the centralized controller 132 and the Internet cloud 300 are able to exchange information. Thus, the centralized controller 132 is able to cause the operation information of the refrigerator 100 and each external device other than the refrigerator 100 to be stored in the Internet cloud 300.

In addition, the switchboard 137 is connected not only to the centralized controller 132 but also to the solar panel 139 and the storage battery of the electric vehicle 140. Thus, when an electric power company has difficulty in supplying power, it is possible to supply power from the solar panel 139 or the storage battery of the electric vehicle 140 to the switchboard 137 and distribute the power to the refrigerator 100 and each external device.

Hereinafter, an operation example of Fig. 9 will be described. In particular, an operation example for informing that it is difficult to supply power to the refrigerator 100 when it is difficult to supply power according to an emergency earthquake flash report or the like, will be described. When it is difficult to supply power according to an emergency earthquake flash report or the like, the Internet cloud 300 transmits, to the centralized controller 132, information indicating that it is difficult to supply power. Then, the centralized controller 132 transmits, to the refrigerator 100 and each external device, the information indicating that it is difficult to supply power. Then, when the refrigerator 100 receives, from the centralized controller 132, the information indicating that it is difficult to supply power, Fig. 10 is displayed on the operation display panel 6.

Fig. 10 is a diagram showing an example of a power saving setting screen displayed during a power consumption saving mode on the operation display panel 6 of the refrigerator 100 according to Embodiment 2 of the present invention. As shown in Fig. 10, the pointer 10, power consumption reduction rough indication 17, the power saving state cursor 18, the power saving target value 19, and a power consumption saving mode icon 41 are displayed on the operation display panel 6, and it is possible to select a higher power saving level than the power saving level shown in Fig. 4. As described later, a power consumption saving mode icon 42 is not displayed on the operation display panel 6 in a state of transition to Fig. 10. The power consumption saving mode icon 41 is, for example, a figure representing expression of a human face, and is for informing the user that it is difficult to supply power.

Next, an operation example of Fig. 10 will be described.

When the user operates the current power saving state cursor 18 to slide the power saving state cursor 18 to the right side of the sheet and sets the power saving target value 19 such that the power consumption reduction rough indication 17 is, for example, equal to or higher than 15%, the power consumption saving mode icon 42 is displayed on the operation display panel 6. Then, when the user operates the power consumption saving mode icon 42, the screen transitions to a screen of Fig. 11. When it is difficult to supply power, only a power saving level that is selectable only when it is difficult to supply power may be displayed on the operation display panel 6. In addition, it may be configured such that when the refrigerator 100 receives information indicating that it is difficult to supply power, Fig. 10 is not displayed and the screen of Fig. 11 is displayed on the operation display panel 6.

Here, the "power consumption saving mode" is a mode in which a function with which the life can be maintained with minimum required power consumption is held, and is a mode which is settable only when it is difficult to supply power. When this mode is set, the temperature of each storage compartment is set such that the power consumption is at its minimum, for example, by reducing the power consumption by about 30% or more as compared to a normal operation (e.g., an operation at a power saving level of 0%).

Fig. 11 is a diagram showing an example of a power consumption saving mode temperature detailed explanation diagram displayed during the power consumption saving mode on the operation display panel 6 of the refrigerator 100 according to Embodiment 2 of the present invention. Fig. 11 is a screen to which transition is made when the power consumption saving mode icon 42 is operated in Fig. 10. As shown in Fig. 11, the refrigerator current temperature etc. display area 20, a set temperature etc. display area 43 which is set in the power consumption saving mode, a caution point button 44, a decision button 45, and a cancel button 46 are displayed on the operation display panel 6.

The set temperature etc. display area 43 is, for example, a diagram schematically showing a front view of the refrigerator 100, and wording indicating a state in each storage compartment is displayed in each storage compartment. The wording is, for example, "15 degrees C or higher" for the refrigerating compartment 1, "about 0 degrees C" for the switching compartment 2, "stop of ice-making about 0 degrees C" for the ice making compartment 3, "about -7 degrees C" for the freezing compartment 4, "15 degrees C or higher" for the vegetable compartment 5.

Here, when the "power consumption saving mode" is set, a period when it is difficult to supply power is assumed, for example, as about 2 weeks, and thus the set temperature for the freezing compartment 4 is set at -7 degrees C at which a food storage life is about 2 weeks. In addition, since the temperatures of the refrigerating compartment 1 and the vegetable compartment 5 are equal to or higher than 15 degrees C, it is possible to use each of the refrigerating compartment 1 and the vegetable compartment 5 as a cool and dark place. Furthermore, since the temperatures of the switching compartment 2 and the ice making compartment 3 are about 0 degrees C, it is possible to use each of the switching compartment 2 and the ice making compartment 3 as a chilled compartment. The temperature value of each storage compartment is an example and may be another temperature value.

The caution point button 44 is a button for displaying a caution point about how to use each storage compartment during the power consumption saving mode. When the caution point button 44 is operated, contents such as how long it is possible to store food materials in each storage compartment are displayed. Specifically, for example, as how to use the freezing compartment 4, the contents indicate a specific storage life, for example, indicate that a food storage life in freezing is normally about 2 months but a food storage life during the power consumption saving mode is about 2 weeks. In the decision button 45, wording indicating positive, such as "Yes", is displayed. In the cancel button 46, wording indicating negative, such as "No", is displayed. The user is allowed to clearly know a demerit due to a change in operation of the refrigerator, by operating the caution point button 44.

Next, an operation example of Fig. 11 will be described.

When the user confirms the set temperature etc. display area 43 for each storage compartment of the refrigerator 100 and determines to execute the power consumption saving mode, the user operates the decision button 45. When the decision button 45 is operated, the power consumption saving mode is executed. On the other hand, when the user takes into consideration the refrigerator interior information such as the temperatures displayed on the set temperature etc. display area 43, the caution point for the power consumption saving mode displayed when the caution point button 24 is operated, and the demerit due to the change in operation, and determines not to execute the power consumption saving mode, the user operates the cancel button 46. When the cancel button 46 is operated, the screen returns to the screen of Fig. 10. The example where the screen transitions to Fig. 11 when the power consumption saving mode icon 42 in Fig. 10 is operated, has been described, but the present invention is not limited thereto. For example, it may be configured such that when the power consumption saving mode icon 42 in Fig. 10 is operated, a plurality of power saving plans including a power saving plan in which the power consumption is at its minimum are displayed on the operation display panel 6, and the user may be caused to select one power saving plan from among the plurality of power saving plans including the power saving plan in which the power consumption is at its minimum.

Here, when it is difficult to supply power, power is not supplied from any device other than the solar panel 139 and the storage battery of the electric vehicle 140 to the refrigerator 100 and each external device. Thus, it is assumed that the total amount of power supplied to the refrigerator 100 and each external device when it is difficult to supply power is smaller than the total amount of power supplied to the refrigerator 100 and each external device when it is not difficult to supply power. In Embodiment 2, the refrigerator 100 and each external device are provided with communication means which performs communication with the centralized controller 132, and when receiving, from the centralized controller, information indicating that it is difficult to supply power, the refrigerator 100 and each external device are operated with minimum required power consumption. Thus, it is possible to hold the function with which the life can be maintained.

### Embodiment 3

Fig. 12 is a diagram showing an example of a power saving plan selection screen displayed on the operation display panel 6 of the refrigerator 100 according to Embodiment 3 of the present invention. Fig. 12 is a screen to which transition is made when the power saving state cursor 18 is operated and the power saving target value 19 is set in Fig. 4. As shown in Fig. 12, the current temperature etc. display area 20, the power saving plan display area 21, wording 50, and a simple explanation display area 52 are displayed on the operation display panel 6. In Embodiment 3, the description of the parts common to Embodiments 1 and 2 is omitted, and the difference from Embodiments 1 and 2 will be mainly described.

In Embodiment 3, unlike Embodiment 2, a load detection sensor (not shown) or a refrigerant interior capturing camera (not shown) with which it is possible to determine a food load amount is provided to each storage compartment of the refrigerator 100. There are no particular limitations on the detection method of the sensor which determines a food load amount, and, for example, a mechanical sensor or an optical sensor may be used. The control means determines the power saving level set by the user and a food load amount in the refrigerator 100 by using detection information of the load detection sensor or the refrigerant interior capturing camera, and a recommended power saving plan suitable for the user is displayed on the operation display panel 6. A specific example will be described below. The load detection sensor or refrigerant interior capturing camera corresponds to load detection means of the present invention.

As shown in Fig. 12, a phrase "recommended ice-making stop type plan" within the simple explanation display area 52 is displayed so as to be associated with the power saving plan setting button 21 c, and the user is allowed to understand that the "power saving plan C" is more recommended than the "power saving plan A" and the "power saving plan B". The wording 50 is wording indicating a reason why the above "power saving plan C" is recommended. Specifically, the wording 50 is, for example, "power saving plan C is recommended since ice-making has not been used recently".

As described above, the user is allowed to understand the recommended power saving plan from among the plurality of power saving plans, as well as the reason why the power saving plan is recommended. Thus, the user is allowed to execute temperature adjustment and power saving after understanding that the power saving plan is suitable for the own use, and is prevented from wondering over which power saving plan should be used to save power.

The example where the wording is added such that the recommended plan is displayed so as to be distinguished from the other power saving plans, has been described, but the present invention is not limited thereto. For example, the recommended power saving plan may be represented in a color different from those of the other power saving plans, whereby the recommended power saving plan may be displayed so as to be distinguished from the other power saving plans. In addition, only the recommended plan may be displayed on the operation display panel 6. That is, only the power saving plan C may be displayed on the operation display panel 6.

### Embodiment 4

Fig. 13 is a diagram showing an example of a power saving plan temperature detailed explanation diagram displayed on the operation display panel 6 of the refrigerator 100 according to Embodiment 4 of the present invention. Fig. 13 is an example of a screen to which transition is made when the "power saving plan A" in the power saving plan setting button 21 a is selected in Fig. 5. In Embodiment 4, the description of the parts common to Embodiments 1 to 3 is omitted, and the difference from Embodiments 1 to 3 will be mainly described.

As shown in Fig. 13, similarly to Fig. 6, the current temperature etc. display area 20, the set temperature etc. display area 23, the caution point button 24, the decision button 25, and the cancel button 26 are displayed. On the other hand, in Fig. 13, unlike Fig. 6, current power consumption 58 is displayed below the current temperature etc. display area 20, and power consumption 59 during the power saving plan is displayed below the set temperature etc. display area 23. For example, the current power consumption 58 is "current power consumption: 0.924 kwh/d", and the power consumption 59 during the power saving plan is "expected power consumption during this plan: 0.814 kwh/d". The current power consumption 58 and the power consumption 59 during the power saving plan as described above are calculated by the control means, for example, based on detection information of a power consumption detection sensor (not shown) which detects the power consumption of the refrigerator 100.

As described above, since the value of power consumption in each operating state is displayed on the operation display panel 6, the user is allowed to quantitatively understand the power consumption, which leads to improvement in motivating the user to save power.

As power consumption, on the operation display panel 6, the current temperature and the temperature after power saving may not be displayed as described above, and a relative value between the current power consumption and the power saving plan may be displayed, or an electricity price per day calculated from power consumption may be displayed.

### Embodiment 5

In Embodiment 5, the description of the parts common to Embodiments 1 to 4 is omitted, and the difference from Embodiments 1 to 4 will be mainly described. In Embodiment 5 as well, similarly to Embodiment 2, a network as in Fig. 9 is established. In Embodiment 5, each of the external devices such as the air-conditioning device 134 and the television 135 includes a power consumption detection sensor (not shown). If power consumption detected by the power consumption detection sensor of the external device is increased to be equal to higher than a threshold, information indicating that the power consumption is equal to or higher than threshold electric energy is transmitted from the centralized controller 132 to the refrigerator 100.

Upon acquiring, via the centralized controller 132, the information indicating that the power consumption of the external device is equal to or higher than the threshold electric energy, the refrigerator 100 executes a power saving plan which is preset in the refrigerator 100 and in which power consumption is lower than the current power consumption, and the temperature in each storage compartment changes. Thus, by reducing the power consumption of the refrigerator 100, it is possible to cut the peak of the power consumption of the entire household, and it is possible to suppress excessive power consumption in the entire household.

The example where the refrigerator 100 is connected to the other external device via the centralized controller 132 has been described, but the refrigerator 100 may be connected directly to the other external device. In this case, information indicating that the power consumption detected by the power consumption detection sensor is equal to or higher than the threshold electric energy is transmitted from the other external device to the refrigerator 100.

The method of reducing power consumption is not limited to the above-described example, and when the power consumption of the external device other than the refrigerator 100 increases as described above, the control means may delay startup of a defrost heater having relatively high power consumption in operation of the refrigerator 100, to execute peak cut.

### Embodiment 6

Next, Embodiment 6 will be described. In Embodiment 6, the description of the parts common to Embodiments 1 to 5 is omitted, and the difference from Embodiments 1 to 5 will be mainly described. In Embodiment 6 as well, similarly to Embodiment 2, a network as in Fig. 9 is established, and the refrigerator 100 is configured to be able to exchange information with the Internet cloud 300 via the centralized controller 132.

Hereinafter, transmission and reception of data in Embodiment 6 will be described.

When the refrigerator 100 transmits operation information, such as information indicating, for example, power consumption and a load of the refrigerator 100 and information indicating the door opening frequency, to the Internet cloud 300 via the centralized controller 132, the Internet cloud 300 stores the operation information of the refrigerator 100. The operation information may be transmitted from the refrigerator 100 to the Internet cloud 300 each time the operation information is updated within the refrigerator 100, or may be transmitted from the refrigerator 100 to the Internet cloud 300 every given time.

By storing the operation information of the refrigerator 100 in the Internet cloud 300 as described above, it is possible to store the operation information of which amount is equal to or higher than the storage capacity of the refrigerator 100, and when the refrigerator 100 breaks down, it is possible to acquire a more amount of past operation information required for investigating the reason of the breakdown than in the related art. Therefore, the operation information required for analyzing the reason of the breakdown is more substantial than in the related art, and it is possible to provide more accurate maintenance service to the user.

It is possible to extract the operation information of the refrigerator 100 stored on the Internet cloud 300, by a device (a personal computer, a refrigerator, etc.) connected to the Internet. In addition, the configuration in which the refrigerator 100 is able to exchange information with the Internet cloud 300 via the centralized controller 132 has been described, but the refrigerator 100 may be configured to be connected directly to the Internet cloud 300, not via the centralized controller 132.

At least either one of the operation display panel 6 and the tablet terminal 136 corresponds to "operation display means" of the present invention.

### Reference Signs List

1 refrigerating compartment 2 switching compartment 2a storage case 3 ice making compartment 4 freezing compartment 4a storage case 5 vegetable compartment 5a outer case 6 operation display panel 10 pointer 11 temperature setting evaluation section 11 a figure 12 use evaluation section 12a figure 13 integral determination evaluation section 13a figure 14 evaluation display guide section 14a, 14b, 14c, 14d, 14e figure 15 power saving adjustment button 16 detail check button 17 power consumption reduction rough indication 18 power saving state cursor 19 power saving target value 20 current temperature etc. display area 21 power saving plan display area 21 a, 21 b, 21 c power saving plan setting button 22 simple explanation display area 23 set temperature etc. display area 24 caution point button 25 decision button 26 cancel button27 integral determination level transition graph 28 door opening state display area 28a mark 29 use advice display area 29a, 29b wording 30 history confirmation button 31 door opening frequency display graph 41 power consumption saving mode icon 42 power consumption saving mode icon 43 set temperature etc. display area 44 caution point button 45 decision button 46 cancel button 50 wording 52 simple explanation display area 58 current power consumption 59 power consumption during power saving plan 92 compressor 93 cooler 94 air-sending fan 95 air passage 100 refrigerator 132 centralized controller 134 air-conditioning device 135 television 136 tablet terminal 137 switchboard 139 solar panel 140 electric vehicle 200 house 300 Internet cloud

## Claims

1. A refrigerator comprising:
a storage compartment;
operation display means configured to display a plurality of power saving levels each indicating a power saving index and to accept an operation input of selecting one power saving level from among the plurality of power saving levels; and
control means configured to, when an operation input of selecting one power saving level from among the plurality of power saving levels displayed on the operation display means is made, calculate one or a plurality of target temperature setting plans regarding a target temperature for the storage compartment in accordance with the selected one power saving level, wherein
the operation display means displays the target temperature setting plans calculated by the control means and accepts an operation input of executing the target temperature setting plan.

2. The refrigerator of claim 1, further comprising
load detection means configured to detect a food load amount within the storage compartment, wherein
when the operation input of selecting one power saving level from among the plurality of power saving levels displayed on the operation display means is made, the control means calculates a target temperature setting plan based on the selected one power saving level and a load detected by the load detection means.

3. The refrigerator of claim 2, wherein
the control means calculates a plurality of target temperature setting plans including the target temperature setting plan calculated based on the selected one power saving level and the load detected by the load detection means, and
in displaying the plurality of target temperature setting plans, the operation display means displays the target temperature setting plans such that the target temperature setting plan calculated based on the selected one power saving level and the load detected by the load detection means is distinguished from the other target temperature setting plans.

4. The refrigerator of any one of claims 1 to 3, further comprising
a door opening frequency detection sensor configured to detect an opening frequency of a door of the storage compartment, wherein
the control means calculates the current power saving level based on information indicating the opening frequency of the door detected by the door opening frequency detection sensor and a set temperature for the storage compartment, and
the operation display means displays either one of or both the power saving level calculated by the control means and information which prompts power saving.

5. The refrigerator of any one of claims 1 to 4, wherein the operation display means is of a touch panel type.

6. The refrigerator of any one of claims 1 to 5, further comprising
external device communication means configured to communicate with an external device, wherein
upon acquiring, via the external device communication means, information indicating that power consumption of the external device is increased to be equal to or higher than a threshold, the control means switches to a target temperature setting plan in which power consumption is lower than the current power consumption.

7. The refrigerator of any one of claims 1 to 6, further comprising
cloud communication means configured to communicate with an Internet cloud via a network, wherein
the control means transmits operation information of the refrigerator via the cloud communication means to the Internet cloud to store the operation information of the refrigerator in the Internet cloud.

8. The refrigerator of any one of claims 1 to 7, further comprising
external device communication means configured to communicate with an external device, wherein
upon acquiring, via the external device communication means, information indicating that it is difficult to supply power, the control means calculates a target temperature setting plan in which power consumption of the refrigerator is minimized, and
the operation display means displays the target temperature setting plan in which the power consumption of the refrigerator is minimized.

9. The refrigerator of claim 8, wherein
upon acquiring, via the external device communication means, the information indicating that it is difficult to supply power, the control means calculates a plurality of target temperature setting plans including the target temperature setting plan in which the power consumption of the refrigerator is minimized, and
the operation display means displays the plurality of target temperature setting plans including the target temperature setting plan in which the power consumption of the refrigerator is minimized.

10. The refrigerator of any one of claims 1 to 9, wherein the operation display means displays either one of or both a current set temperature for the storage compartment and a current power saving level.
